# EUROPEAN PATENT APPLICATION

(11) **EP 4 106 293 A2**
(43) Date of publication of application: **21.12.2022**
(21) Application number: 22178662.7
(22) Date of filing: 13.06.2022
(51) Int. Cl.: H04L 41/0816, H04L 61/4511, H04L 61/5014

(54) **NETWORK CONFIGURING METHOD AND APPARATUS FOR CLOUD MOBILE PHONE, DEVICE AND STORAGE MEDIUM**

(30) Priority: 03.08.2021 CN 202110888292
(71) Applicant: BEIJING BAIDU NETCOM SCIENCE TECHNOLOGY CO., LTD., Beijing 100085 (CN)
(72) Inventor: CHANG, Ming, Beijing, 100085 (CN)
(74) Representative: V.O.

(57) **Abstract**

A network configuring method and apparatus for cloud mobile phone and a storage medium are provided. A specific implementation comprises: acquiring, in response to a completion of an initiation of a container, network configuration information in the container; and modifying, during an initialization of a cloud mobile phone, a configuration of the cloud mobile phone for a network according to the network configuration information, for the cloud mobile phone to access the network.

## Description

### TECHNICAL FIELD

The present invention relates to the field of computer technology, specifically to the field of cloud service, and particularly to a network configuring method and apparatus for cloud mobile phone, a device and a storage medium.

### BACKGROUND

A cloud mobile phone is a cloud computing based smartphone application cloud platform relating to powerful virtual application and a mobile Internet. Based on the outstanding advantages of cloud computing in many aspects such as large-scale computing, a powerful storage capability, and application virtualization, the cloud platform provides a smartphone user with diversified and all-round virtual mobile phone applications and services, fully supports the display, download, application and management services of various mobile phone application programs, and eminently realizes intelligently round-the-clock hosting of applications at a cloud side. Accordingly, the user can host various application programs at the cloud side even in a state of separateness from a mobile terminal, thus maintaining a round-the-clock online state, and thus, the virtualization of a smartphone application is fully achieved.

### SUMMARY

The present invention provides a network configuring method and apparatus for cloud mobile phone, a device and a storage medium.

According to a first aspect of the present invention, some embodiments of the present invention provide a network configuring method for cloud mobile phone, including: acquiring, in response to a completion of an initiation of a container, network configuration information in the container; and modifying, during an initialization of a cloud mobile phone, a configuration of the cloud mobile phone for a network according to the network configuration information, for the cloud mobile phone to access the network.

According to a second aspect of the present invention, some embodiments of the present invention provide a network configuring apparatus for cloud mobile phone, including: an information acquiring unit, configured to acquire, in response to a completion of an initiation of a container, network configuration information in the container; and a network configuring unit, configured to modify, during an initialization of a cloud mobile phone, a configuration of the cloud mobile phone for a network according to the network configuration information, for the cloud mobile phone to access the network.

According to a third aspect of the present invention, some embodiments of the present invention provide an electronic device, including: at least one processors; and a storage device, communicated with the at least one processor, wherein the storage device stores an instruction executable by the at least one processor, and the instruction is executed by the at least one processor, to enable the at least one processor to perform the method according to the first aspect.

According to a fourth aspect of the present invention, some embodiments of the present invention provide a non-transitory computer readable storage medium, storing a computer instruction, wherein the computer instruction is used to cause a computer to perform the method according to the first aspect.

According to a fourth aspect of the present invention, some embodiments of the present invention provide a computer program product including a computer program, wherein the computer program, when executed by a processor, implements the method according to the first aspect.

According to the technology of the present invention, it is possible to reduce the dependence on external services in the network environment, save related hardware resources, save the manpower input for an initial configuration, and save the manpower input for a later configuration and update.

It should be understood that the content described in this part is not intended to identify key or important features of the embodiments of the present invention, and is not used to limit the scope of the present invention. Other features of the present invention will be easily understood through the following description.

### BRIEF DESCRIPTION OF THE DRAWINGS

The accompanying drawings are used for a better understanding of the scheme, and do not constitute a limitation to the present invention. Here:
Fig. 1 is a diagram of an exemplary system architecture in which an embodiment of the present invention may be applied;
Fig. 2 is a flowchart of a network configuring method for cloud mobile phone according to an embodiment of the present invention;
Fig. 3 is a schematic diagram of an application scenario of the network configuring method for cloud mobile phone according to an embodiment of the present invention;
Fig. 4 is a flowchart of a network configuring method for cloud mobile phone according to another embodiment of the present invention;
Fig. 5 is a flowchart of a network configuring method for cloud mobile phone according to still another embodiment of the present invention;
Fig. 6 is a flowchart of a network configuring method for cloud mobile phone according to still another embodiment of the present invention;
Fig. 7 is a schematic structural diagram of a network configuring apparatus for cloud mobile phone according to an embodiment of the present invention; and
Fig. 8 is a block diagram of an electronic device used to implement the network configuring method for cloud mobile phone according to embodiments of the present invention.

### DETAILED DESCRIPTION OF EMBODIMENTS

Exemplary embodiments of the present invention are described below in combination with the accompanying drawings, and various details of the embodiments of the present invention are included in the description to facilitate understanding, and should be considered as exemplary only. Accordingly, it should be recognized by one of ordinary skill in the art that various changes and modifications may be made to the embodiments described herein without departing from the scope and spirit of the present invention. Also, for clarity and conciseness, descriptions for well-known functions and structures are omitted in the following description.

It should be noted that embodiments in the present invention and the features in the embodiments may be combined with each other on a non-conflict basis. Embodiments of the present invention will be described below in detail with reference to the accompanying drawings.

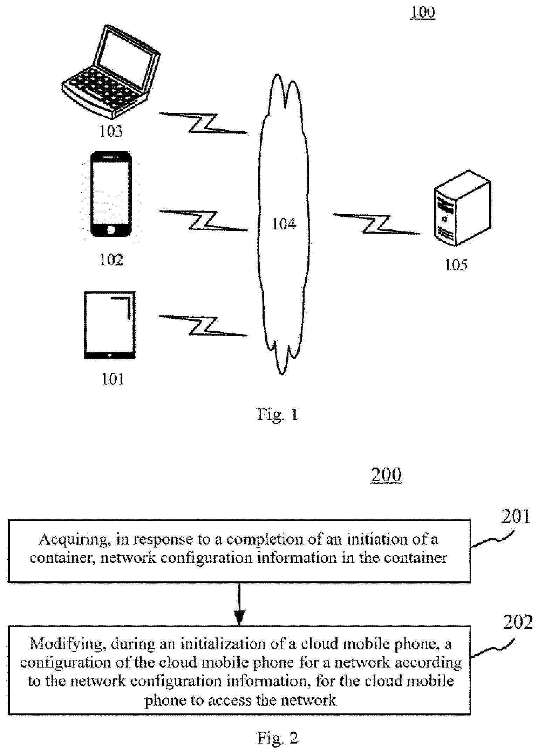

Fig. 1 illustrates an exemplary system architecture 100 in which a network configuring method for cloud mobile phone or a network configuring apparatus for cloud mobile phone according to embodiments of the present invention may be applied.

As shown in Fig. 1, the system architecture 100 may include terminal devices 101, 102 and 103, a network 104 and a server 105. The network 104 serves as a medium providing a communication link between the terminal devices 101, 102 and 103 and the server 105. The network 104 may include various types of connections, for example, wired or wireless communication links, or optical fiber cables.

A user may use the terminal devices 101, 102 and 103 to interact with the server 105 via the network 104, to receive or send a message, etc. Various communication client applications (e.g., a cloud mobile phone client) may be installed on the terminal devices 101, 102 and 103. The user can use a cloud mobile phone through the cloud mobile phone client.

The terminal devices 101, 102 and 103 may be hardware or software. When being the hardware, the terminal devices 101, 102 and 103 may be various electronic devices, the electronic devices including, but not limited to, a smartphone, a tablet computer, an e-book reader, a vehicle-mounted computer, a laptop portable computer, a desktop computer, and the like. When being the software, the terminal devices 101, 102 and 103 may be installed in the above listed electronic devices. The terminal devices 101, 102 and 103 may be implemented as a plurality of pieces of software or a plurality of software modules (e.g., software or software modules for providing a distributed service), or may be implemented as a single piece of software or a single software module, which will not be specifically limited here.

The server 105 may be a server providing various services, for example, a backend server providing support for the cloud mobile phone client installed on the terminal devices 101, 102 and 103. The backend server may provide support for network access of the cloud mobile phone client.

It should be noted that the server 105 may be hardware or software. When being the hardware, the server 105 may be implemented as a distributed server cluster composed of a plurality of servers, or may be implemented as a single server. When being the software, the server 105 may be implemented as a plurality of pieces of software or a plurality of software modules (e.g., software or software modules for providing a distributed service), or may be implemented as a single piece of software or a single software module, which will not be specifically limited here.

It should be noted that the network configuring method for cloud mobile phone provided in embodiments of the present invention is generally performed by the server 105. Correspondingly, the network configuring apparatus for cloud mobile phone is generally provided in the server 105.

It should be appreciated that the numbers of the terminal devices, the networks and the servers in Fig. 1 are merely illustrative. Any number of terminal devices, networks and servers may be provided based on actual requirements.

An Android container operating system is an operating system that allows a cloud mobile phone to run on a server. The Android container operating system runs on the basis of an independent Docker, and the cloud mobile phone runs on the Android container operating system. For the use of a network in the cloud mobile phone, the cloud mobile phone has a self-customized procedure to support a specific network capability, and does not use IP and routing configurations prepared and completed by default when a container is created. Rather, the cloud mobile phone, when initialized, clears a network card IP configuration and a routing table, issues a DHCP (Dynamic Host Configuration Protocol) request, and then configures an IP (Internet Protocol) according to the DHCP and configures iptables forwarding to replace the routing table, thus realizing the capability of controlling whether the application of the cloud mobile phone can access the network.

These differences make the network configuration of the cloud mobile phone impossible to use the automatic configuration of the container, and thus, the cooperation of other components of an external network environment is required.

Referring to Fig. 2, Fig. 2 illustrates a flow 200 of a network configuring method for cloud mobile phone according to an embodiment of the present invention. The network configuring method for cloud mobile phone in this embodiment includes the following steps:

Step 201, acquiring, in response to a completion of an initiation of a container, network configuration information in the container.

The container is an operating system-level virtualization technology, which is a user space interface for Linux kernel container functions. The container packages an application software system into a software container, containing the code of application software itself and the required operating system core and library. By allocating available hardware resources of different software containers through a unified namespace and a common API, a separate sandbox running environment of an application program is created, such that a Linux user can easily create and manage a system or an application container. A container for running a cloud mobile phone will automatically configure various aspects such as the network, during the initiation of the container.

In this embodiment, if the initiation of the container is completed, an executing body may acquire the network configuration information in the container in a plurality of ways. For example, the network configuration information may be acquired through various instruction functions within the container. The network configuration information may include information such as an IP address and a subnet mask.

Step 202, modifying, during an initialization of a cloud mobile phone, a configuration of the cloud mobile phone for a network according to the network configuration information, for the cloud mobile phone to access the network.

After acquiring the network configuration information, the executing body may initialize the cloud mobile phone by using the network configuration information, to configure the network. Specifically, the executing body may modify the network configuration of the cloud mobile phone according to the network configuration information. In this way, the cloud mobile phone can access the network according to the network configuration information of the container, and thus, the speed at which the cloud mobile phone accesses the network can be accelerated. In addition, since the cloud mobile phone accesses the network through the network configuration information of the container, it is not required to provide an other network access hardware device, thereby saving manpower and material resources.

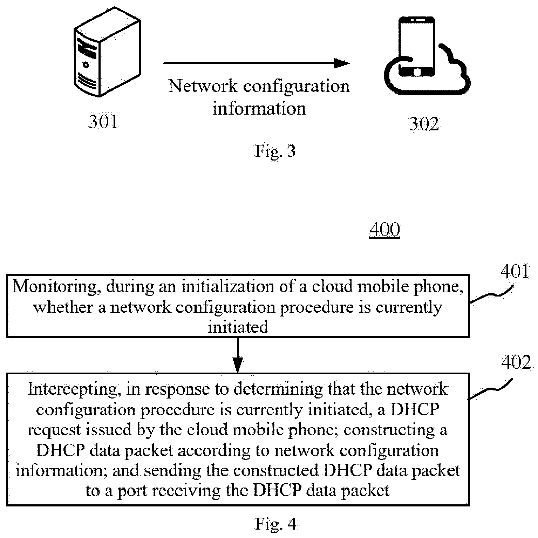

Further referring to Fig. 3, Fig. 3 is a schematic diagram of an application scenario of the network configuring method for cloud mobile phone according to the present invention. In the application scenario of Fig. 3, a server 301 provides support for a cloud mobile phone client installed in a client 302. The container in the server 301 acquires network configuration information after the initiation of the container is completed. Moreover, the network configuration of the cloud mobile phone is modified according to the network configuration information. Accordingly, the network can be accessed by using the network configuration in the container without relying on the service provided by the external hardware, thereby increasing the speed of the network access.

According to the network configuring method for cloud mobile phone provided in the above embodiment of the present invention, it is not required to provide an other network access hardware device, thereby saving manpower and material resources.

Further referring to Fig. 4, Fig. 4 illustrates a flow 400 of a network configuring method for cloud mobile phone according to another embodiment of the present invention. As shown in Fig. 4, the method in this embodiment may include the following steps:

Step 401, monitoring, during an initialization of a cloud mobile phone, whether a network configuration procedure is currently initiated.

In this embodiment, an executing body may monitor whether an instruction or function for a network configuration in the cloud mobile phone is executed. If the instruction or function is executed, it indicates that the cloud mobile phone is currently performing a network configuration. If the executing body determines that the network configuration is currently being performed, the configuration of the cloud mobile phone for a network may be modified according to network configuration information.

Step 402, intercepting, in response to determining that the network configuration procedure is currently initiated, a DHCP request issued by the cloud mobile phone; constructing a DHCP data packet according to network configuration information; and sending the constructed DHCP data packet to a port receiving the DHCP data packet.

In this embodiment, when performing the network configuration on the cloud mobile phone, the executing body may first intercept the DHCP request issued by the cloud mobile phone, which prevents the cloud mobile phone from acquiring information such as an IP address and a routing table from the external network. The executing body may construct the DHCP data packet according to the acquired network configuration information. It may be appreciated that the executing body, when constructing the data packet, needs to perform the construction according to the format of the DHCP data packet. It may be appreciated that the constructed DHCP data packet has the same format as an externally received DHCP data packet. The executing body may send the constructed DHCP data packet to the port for receiving the DHCP data packet. Specifically, the executing body may first determine the address of the port for receiving the DHCP data packet, and send the DHCP data packet to the address of the port through a code or an instruction. In this way, the cloud mobile phone may analyze the DHCP data packet, and configure the network according to the network configuration procedure of an Android operating system, to access the network.

In some alternative implementations of this embodiment, the executing body may construct the DHCP data packet by: analyzing the network configuration information to obtain an IP address, a subnet mask, a gateway IP address and a DNS server address; and constructing the DHCP data packet according to the obtained information.

In this implementation, the executing body may analyze the network configuration information to obtain information required to construct the DHCP data packet, for example, the IP address, the subnet mask, the gateway IP address and the DNS (domain name system) server address. Moreover, according to the above content, the DHCP data packet is constructed according to the format of the DHCP data packet.

According to the network configuring method for cloud mobile phone provided in the above embodiment of the present invention, it is possible to reduce the dependence on external services in the network environment, and it is possible to save related hardware resources, the manpower input for an initial configuration and the manpower input for a later configuration and update. In addition, it can be ensured that the cloud mobile phone works according to the network configuration of the cluster manager of a cluster providing a service for the cloud mobile phone, which avoids the problem caused by the mismatch between the configuration of the container and the configuration of the Android operating system. Since no additional hardware device is added, the design of the network topology becomes more convenient, thus realizing more network functions.

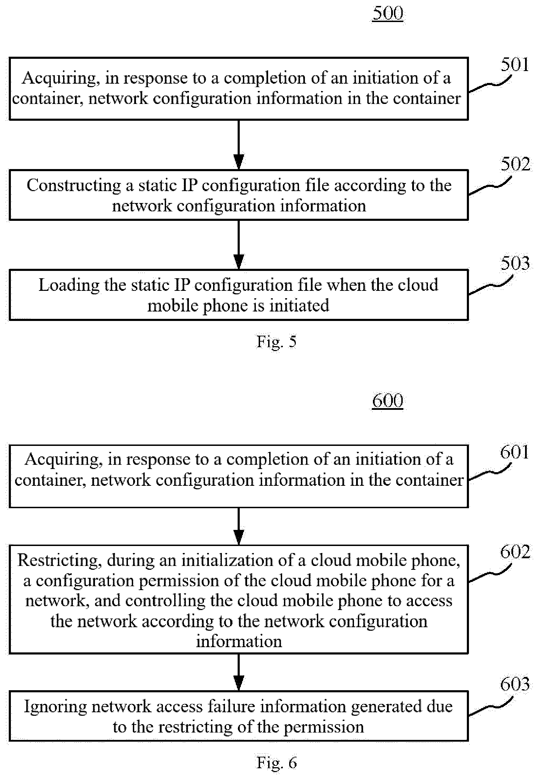

Further referring to Fig. 5, Fig. 5 illustrates a flow 500 of another embodiment of the method for configuring a network of a cloud mobile phone according to the present invention. As shown in Fig. 5, the method in this embodiment may include the following steps:

Step 501, acquiring, in response to a completion of an initiation of a container, network configuration information in the container.

Step 502, constructing a static IP configuration file according to the network configuration information.

In this embodiment, the executing body may further analyze the network configuration information to determine the static IP configuration file required to be loaded during the initiation of the cloud mobile phone. The static IP configuration file includes configuration information of the accessed network. For example, the static IP configuration file may include an IP address, a subnet mask, a gateway IP address and a DNS server address. The static IP configuration file may be a file of a Java format.

Step 503, loading the static IP configuration file when the cloud mobile phone is initiated.

The cloud mobile phone loads the static IP configuration file when initiated, and performs network setting according to the network configuration procedure of an Android operating system, and thus, the access to the network can be realized.

According to the network configuring method for cloud mobile phone provided in the above embodiment of the present invention, the network accessed by the cloud mobile phone can be configured in a static way.

Further referring to Fig. 6, Fig. 6 illustrates a flow 600 of a network configuring method for cloud mobile phone according another embodiment of to the present invention. As shown in Fig. 6, the method in this embodiment may include the following steps:

Step 601, acquiring, in response to a completion of an initiation of a container, network configuration information in the container.

Step 602, restricting, during an initialization of a cloud mobile phone, a configuration permission of the cloud mobile phone for a network, and controlling the cloud mobile phone to access the network according to the network configuration information.

In this embodiment, during the initialization of the cloud mobile phone, an executing body may retrieve the configuration permission of the cloud mobile phone for the network by modifying the permission of the cloud mobile phone. Specifically, the executing body may monitor the behavior of the cloud mobile phone, and reject, if a behavior corresponding to the configuration permission occurs, the behavior. In order to cause the cloud mobile phone to access the network, the executing body may control the cloud mobile phone to access a network environment set by the container. That is, the parameter of the cloud mobile phone accessing the network is set according to the network configuration information.

Step 603, ignoring network access failure information generated due to the restricting of the permission.

Meanwhile, the executing body may modify the code of the cloud mobile phone, and ignore the network access failure information generated due to the restricting of the permission, which avoids the situation where the network cannot be connected due to a state transition error of the cloud mobile phone that is caused by the failure of the control for a network device.

According to the network configuring method for cloud mobile phone provided in the above embodiment of the present invention, some network functions of the cloud mobile phone can be restricted, which avoids the mismatching between different environments that is required in the network access process of the cloud mobile phone.

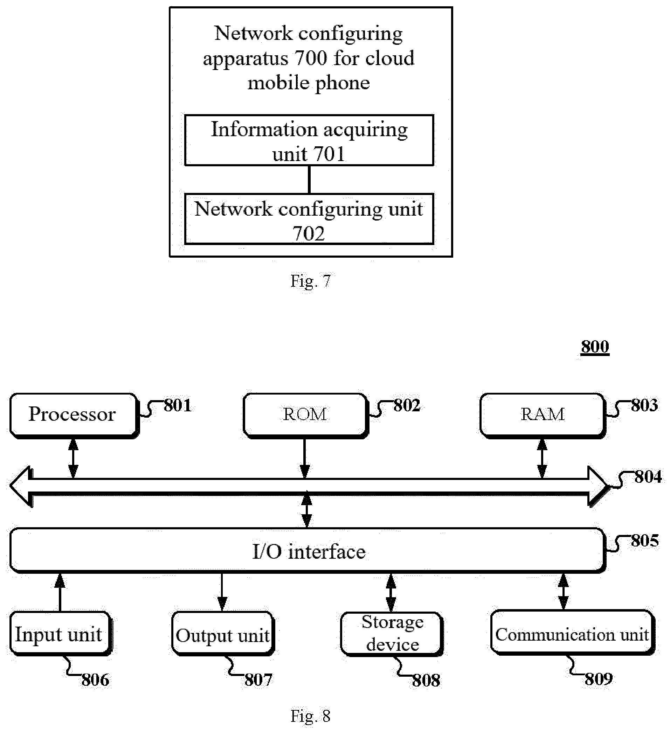

Further referring to Fig. 7, as an implementation of the method shown in the above drawings, an embodiment of the present invention provides a network configuring apparatus for cloud mobile phone. The embodiment of the apparatus corresponds to the embodiment of the method shown in Fig. 2. The apparatus may be applied in various electronic devices.

As shown in Fig. 7, a network configuring apparatus 700 for cloud mobile phone in this embodiment includes: an information acquiring unit 701 and a network configuring unit 702.

The information acquiring unit 701 is configured to acquire, in response to a completion of an initiation of a container, network configuration information in the container.

The network configuring unit 702 is configured to modify, during an initialization of a cloud mobile phone, a configuration of the cloud mobile phone for a network according to the network configuration information, for the cloud mobile phone to access the network.

In some alternative implementations of this embodiment, the network configuring unit 702 may be further configured to: monitor, during the initialization of the cloud mobile phone, whether a network configuration procedure is currently initiated; and modify, in response to determining that the network configuration procedure is currently initiated, the configuration of the cloud mobile phone for the network according to the network configuration information.

In some alternative implementations of this embodiment, the network configuring unit 702 may be further configured to: intercept a DHCP request issued by the cloud mobile phone; construct a DHCP data packet according to the network configuration information; and send the constructed DHCP data packet to a port receiving the DHCP data packet.

In some alternative implementations of this embodiment, the network configuring unit 702 may be further configured to: analyze the network configuration information to obtain an IP address, a subnet mask, a gateway IP address and a DNS server address; and construct the DHCP data packet according to the obtained information.

In some alternative implementations of this embodiment, the network configuring unit 702 may be further configured to: construct a static IP configuration file according to the network configuration information; and load the static IP configuration file when the cloud mobile phone is initiated.

In some alternative implementations of this embodiment, the network configuring unit 702 may be further configured to: restrict a configuration permission of the cloud mobile phone for the network, and control the cloud mobile phone to access the network according to the network configuration information.

In some alternative implementations of this embodiment, the apparatus 700 may further include a message ignoring unit not shown in Fig. 7, the message ignoring unit is configured to: ignore network access failure information generated due to the restricting.

It should be understood that, the units 701-705 included in the network configuring apparatus 700 for cloud mobile phone respectively correspond to the steps in the method described with reference to Fig. 2. Accordingly, the above operations and features described for the network configuring method for cloud mobile phone are also applicable to the apparatus 700 and the units included therein, and thus will not be repeatedly described here.

In the technical solution of the present invention, the acquisition, storage, use, etc. of the personal information of a user all comply with the provisions of the relevant laws and regulations, and do not violate public order and good customs.

According to embodiments of the present invention, an electronic device, a readable storage medium and a computer program product are further provided.

Fig. 8 is a block diagram of an electronic device 800 performing the network configuring method for cloud mobile phone, according to an embodiment of the present invention. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing assistant, a cellular telephone, a smart phone, a wearable device and other similar computing apparatuses. The parts shown herein, their connections and relationships, and their functions are only as examples, and not intended to limit implementations of the present invention as described and/or claimed herein.

As shown in Fig. 8, the electronic device 800 includes a processor 801, which may execute various appropriate actions and processes in accordance with a computer program stored in a read-only memory (ROM) 802 or a computer program loaded into a random access memory (RAM) 803 from a storage device 808. The RAM 803 also stores various programs and data required by operations of the electronic device 800. The processor 801, the ROM 802 and the RAM 803 are connected to each other through a bus 804. An input/output (I/O) interface 805 is also connected to the bus 804.

A plurality of components in the electronic device 800 are coupled to the I/O interface 805, including: an input unit 806, such as a keyboard or a mouse; an output unit 807, such as various types of displays, or speakers; the storage device 808, such as a disk or an optical disk; and a communication unit 809 such as a network card, a modem, or a wireless communication transceiver. The communication unit 809 allows the electronic device 800 to exchange information/data with other devices over a computer network such as the Internet and/or various telecommunication networks.

The processor 801 may be various general-purpose and/or dedicated processing components having processing and computing capabilities. Some examples of the processor 801 include, but are not limited to, central processing unit (CPU), graphics processing unit (GPU), various dedicated artificial intelligence (AI) computing chips, various computing units running machine learning model algorithms, digital signal processor (DSP), and any appropriate processors, controllers, microcontrollers, etc. The processor 801 performs the various methods and processes described above, such as the network configuring method for cloud mobile phone. For example, in some embodiments, the network configuring method for cloud mobile phone may be implemented as a computer software program, which is tangibly included in a machine readable medium, such as the storage device 808. In some embodiments, part or all of the computer program may be loaded and/or installed on the electronic device 800 via the ROM 802 and/or the communication unit 809. When the computer program is loaded into the RAM 803 and executed by the processor 801, one or more steps of the network configuring method for cloud mobile phone described above may be performed. Alternatively, in other embodiments, the processor 801 may be configured to perform the network configuring method for cloud mobile phone by any other appropriate means (for example, by means of firmware).

Various embodiments of the systems and technologies described in this article may be implemented in digital electronic circuit systems, integrated circuit systems, field programmable gate arrays (FPGA), application specific integrated circuits (ASIC), application-specific standard products (ASSP), system-on-chip (SOC), complex programmable logic device (CPLD), computer hardware, firmware, software, and/or their combinations. These various embodiments may include: being implemented in one or more computer programs, the one or more computer programs may be executed and/or interpreted on a programmable system including at least one programmable processor, the programmable processor may be a dedicated or general-purpose programmable processor that may receive data and instructions from a storage system, at least one input apparatus, and at least one output apparatus, and transmit the data and instructions to the storage system, the at least one input apparatus, and the at least one output apparatus.

Program codes for implementing the method of the present invention may be written in any combination of one or more programming languages. These program codes may be provided to a processor or controller of a general purpose computer, special purpose computer or other programmable data processing apparatus such that the program codes, when executed by the processor 801, enables the functions/operations specified in the flowcharts and/or block diagrams being implemented. The program codes may execute entirely on the machine, partly on the machine, as a stand-alone software package partly on the machine and partly on the remote machine, or entirely on the remote machine or server.

In the context of the present invention, the machine readable medium may be a tangible medium that may contain or store programs for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, portable computer disk, hard disk, random access memory (RAM), read only memory (ROM), erasable programmable read only memory (EPROM or flash memory), optical fiber, portable compact disk read only memory (CD-ROM), optical storage device, magnetic storage device, or any suitable combination of the foregoing.

In order to provide interaction with a user, the systems and technologies described herein may be implemented on a computer, the computer has: a display apparatus (e.g., CRT (cathode ray tube) or LCD (liquid crystal display) monitor) for displaying information to the user; and a keyboard and a pointing apparatus (for example, a mouse or trackball), the user may use the keyboard and the pointing apparatus to provide input to the computer. Other kinds of apparatuses may also be used to provide interaction with the user; for example, the feedback provided to the user may be any form of sensory feedback (for example, visual feedback, auditory feedback, or tactile feedback); and may use any form (including acoustic input, voice input, or tactile input) to receive input from the user.

The systems and technologies described herein may be implemented in a computing system (e.g., as a data server) that includes back-end components, or a computing system (e.g., an application server) that includes middleware components, or a computing system (for example, a user computer with a graphical user interface or a web browser, through which the user may interact with the embodiments of the systems and technologies described herein) that includes front-end components, or a computing system that includes any combination of such back-end components, middleware components, or front-end components. The components of the system may be interconnected by any form or medium of digital data communication (e.g., a communication network). Examples of the communication network include: local area network (LAN), wide area network (WAN), and Internet.

The computer system may include a client and a server. The client and the server are generally far from each other and usually interact through a communication network. The client and server relationship is generated by computer programs operating on the corresponding computer and having client-server relationship with each other. The server can be a cloud server, also known as a cloud computing server or cloud host, which is a host product in the cloud computing service system and solves the defects of difficult management and weak business scalability existing in traditional physical host and VPS service ("Virtual Private Server", or simply "VPS"). The server can also be a distributed system server, or a server that incorporates blockchain.

It should be understood that various forms of processes shown above may be used to reorder, add, or delete steps. For example, the steps described in the present invention may be performed in parallel, sequentially, or in different orders, as long as the desired results of the technical solution disclosed in embodiments of the present invention can be achieved, no limitation is made herein.

The above specific embodiments do not constitute a limitation on the protection scope of the present invention. Those skilled in the art should understand that various modifications, combinations, sub-combinations and substitutions can be made according to design requirements and other factors. Any modification, equivalent replacement and improvement made within the spirit and principle of the present invention shall be included in the protection scope of the present invention.

## Claims

1. A network configuring method for cloud mobile phone, comprising:
acquiring, in response to a completion of an initiation of a container, network configuration information in the container; and
modifying, during an initialization of a cloud mobile phone, a configuration of the cloud mobile phone for a network according to the network configuration information, for the cloud mobile phone to access the network.

2. The method according to claim 1, wherein the modifying, during an initialization of a cloud mobile phone, a configuration of the cloud mobile phone for a network according to the network configuration information comprises:
monitoring, during the initialization of the cloud mobile phone, whether a network configuration procedure is currently initiated; and
modifying, in response to determining that the network configuration procedure is currently initiated, the configuration of the cloud mobile phone for the network according to the network configuration information.

3. The method according to claim 1 or 2, wherein modifying the configuration of the cloud mobile phone for the network according to the network configuration information comprises:
intercepting a dynamic host configuration protocol, DHCP, request issued by the cloud mobile phone;
constructing a DHCP data packet according to the network configuration information; and
sending the constructed DHCP data packet to a port receiving the DHCP data packet.

4. The method according to claim 3, wherein the constructing a DHCP data packet according to the network configuration information comprises:
analyzing the network configuration information to obtain an Internet Protocol, IP, address, a subnet mask, a gateway IP address and a domain name system, DNS, server address; and
constructing the DHCP data packet according to the obtained information.

5. The method according to claim 1, wherein modifying the configuration of the cloud mobile phone for the network according to the network configuration information comprises:
constructing a static IP configuration file according to the network configuration information; and
loading the static IP configuration file when the cloud mobile phone is initiated.

6. The method according to claim 1, wherein modifying the configuration of the cloud mobile phone for the network according to the network configuration information comprises:
restricting a configuration permission of the cloud mobile phone for the network, and controlling the cloud mobile phone to access the network according to the network configuration information.

7. The method according to claim 6, further comprising:
ignoring network access failure information generated due to the restricting of the permission.

8. A network configuring apparatus for cloud mobile phone, the apparatus comprising means for carrying out the method according to any one of claims 1-7.

9. A non-transitory computer readable storage medium, storing a computer instruction, wherein the computer instruction is used to cause a computer to perform the method according to any one of claims 1-7.

10. A computer program product, comprising a computer
program, wherein the computer program, when executed by a processor, implements the method according to any one of claims 1-7.
